# EUROPÄISCHE PATENTSCHRIFT

(11) **EP 3 966 001 B1**
(45) Veröffentlichungstag und Bekanntmachung des Hinweises auf die Patenterteilung: **19.04.2023**
(21) Anmeldenummer: 20726009.2
(22) Anmeldetag: 07.05.2020
(51) Int. Cl.: B25J 19/00, F16D 63/00, F16D 125/38

(54) **BREMSVORRICHTUNG FÜR EINE ANTRIEBSEINRICHTUNG EINES ROBOTERS**
BRAKE ASSEMBLY FOR A DRIVE DEVICE IN A ROBOT
DISPOSITIF DE FREINAGE POUR UN SYSTÈME D'ENTRAÎNEMENT D'UN ROBOT

(30) Priorität: 08.05.2019 DE 102019112023
(43) Veröffentlichungstag der Anmeldung: 16.03.2022
(73) Patentinhaber: Franka Emika GmbH, 80797 München (DE)
(72) Erfinder: ROKAHR, Tim, 81245 München (DE); SPENNINGER, Andreas, 85757 Karlsfeld (DE); GARCIA, Carles Calafell, 81539 München (DE)
(74) Vertreter: Habermann, Hruschka & Schnabel
(86) Internationale Anmeldenummer: PCT/EP2020/062793
(87) Internationale Veröffentlichungsnummer: WO 2020/225394

(56) Entgegenhaltungen:
- EP-A1- 3 348 362
- WO-A1-2017/152928
- CN-A- 109 366 522
- DE-A1-102015 116 609
- KR-B1- 101 915 394
- US-A1- 2019 109 549

## Beschreibung

Die vorliegende Erfindung betrifft eine Bremsvorrichtung für eine Antriebseinrichtung eines Gelenks zwischen zwei Gliedern eines Roboterarms bzw. Manipulators, insbesondere eines mehrachsigen Gelenkarmroboters.

Insbesondere für Roboter zum Einsatz im Bereich der Mensch-Roboter-Kollaboration (MRK) ist es zwingend erforderlich, aus Sicherheitsgründen für den Fall von Fehlfunktionen oder bei einem plötzlichen Ausfall der Energieversorgung eine Notstopp- bzw. -bremsvorrichtung vorzusehen, die ausgebildet ist, den Roboterarm so schnell wie möglich anzuhalten, um Verletzungen eines Bedieners des Robotersystems vorzubeugen bzw. um zu verhindern, dass der von dem Roboterarm im Zuge der von diesem auszuführenden Tätigkeit manipulierte Gegenstand oder der Roboterarm selbst beschädigt wird. Ein solcher Notstopp kann auch unmittelbar durch den Benutzer selbst, beispielsweise bei Betätigung eines Notschalters, hervorgerufen werden.

So sind beispielsweise für Gelenkarmroboter Bremseinrichtungen in den unterschiedlichsten Ausgestaltungen bekannt, mithilfe von welchen die Bewegung des Roboterarms zu einem abrupten Halt, zumindest zu einem sehr schnellen Halt innerhalb einer definierten Zeitspanne gebracht werden kann.

In dem Europäischen Patent Nr. 3 045 273 ist beispielsweise ein Bremsmechanismus vorgeschlagen worden, bei dem koaxial zur Motorwelle ein Reibungsring gelagert ist, mit dem ein Zapfen einer Sperrvorrichtung zusammenwirkt, indem im Notfall der Zapfen radial in den Reibungsring eingreift. Aufgrund der Tatsache, dass der Reibungsring relativ zu der Motorwelle unter einem definierten Reibungseingriff drehbar ist, wird eine geringe Bremsverzögerung der Drehbewegung bei Eingriff des radialen Zapfens realisiert.

Aus der Deutschen Patentanmeldung Nr. 10 2015 116 609 A1 ist eine Bremseinrichtung bekannt, bei der ein Bremsstern drehfest mit einer Welle der Antriebseinrichtung verbunden ist und der radial abstehende Zacken aufweist, mit denen für einen notbedingten Halt ein federbetätigter Kopfbolzen in Eingriff gelangt. Die Enden der Zacken sind spitz bzw. so angeschrägt, dass ein Teil der Kraft bei Eingriff mit dem Kopfbolzen in die Biegung des Zackens eingeleitet wird, der quasi als Biegebalken wirkt, und ein Teil längs zu diesem Balken abgelenkt wird. Dennoch sind infolge der hohen Drehgeschwindigkeiten die Auftreffkräfte zwischen dem Kopfbolzen und den Zacken so hoch, dass es zu einer sehr stark ausgeprägten elastischen Verformung kommt, die nach einer gewissen Anzahl an Bremszyklen unter Umständen zu einem Materialversagen der Zacken führen kann.

Eine Bremsvorrichtung für eine Antriebseinrichtung eines Gelenks zwischen zwei Gliedern eines Roboterarms nach dem Oberbegriff des Anspruchs 1 ist beispielsweise aus der KR 101 915 394 B1 bekannt. Eine ähnliche Bremsvorrichtung offenbart die EP 3 348 362 A1.

Ausgehend davon ist es eine Aufgabe der Erfindung, eine Bremsvorrichtung für eine Antriebseinrichtung eines Gelenks zwischen zwei Gliedern eines Roboterarms, insbesondere eines Gelenkarmroboters der Leichtbauweise, zur Verfügung zu stellen, die eine erhöhte Funktionssicherheit bietet und der eine lange Lebensdauer innewohnt.

Gelöst wird diese Aufgabe mit einer Bremsvorrichtung für eine Antriebseinrichtung eines Gelenks nach Anspruch 1. Des Weiteren wird diese Aufgabe gelöst durch eine entsprechende Antriebseinrichtung nach Anspruch 8 sowie durch einen Roboter nach Anspruch 9.

Gemäß der Erfindung wird daher eine Bremsvorrichtung für eine Antriebseinrichtung eines Gelenks zwischen zwei Gliedern eines Roboterarms vorgeschlagen, aufweisend eine Bremsaktivierungsvorrichtung und ein Sperrelement, wobei die Bremsaktivierungseinrichtung ausgebildet ist, das Sperrelement bei Bedarf in Eingriff mit einem Bremselement zu bringen, das mit einem Rotor der Antriebseinrichtung drehfest verbunden ist, um eine Drehung des Rotors zu stoppen, wobei das Sperrelement als ein Bolzen ausgebildet ist und das Bremselement als ein Bremsstern ausgebildet ist, der zumindest einen radial von der Achse des Rotors abragenden Steg aufweist, und wobei der Steg eine mit dem Bolzen bei Eingriff zusammenwirkende Auftrefffläche aufweist, die in Bezug auf eine Drehrichtung des Bremssterns nach innen gewölbt ist und einen Radius aufweist, der zumindest dem Radius des Bolzens entspricht, und sich die Auftrefffläche in Radialrichtung über einen Abstand zwischen der Achse des Rotors und der Achse des Bolzens hinaus erstreckt.

Auf diese Weise wird sichergestellt, dass der Bolzen an der Auftrefffläche insgesamt über einen Abschnitt zur Anlage kommt, der in Radialrichtung nach außen über den radial nach innen gerichteten Viertelskreisumfang des Randes des Bolzens hinausgeht. Beim Auftreffen der Auftrefffläche des Stegs gegen den stationären Bolzen werden die Kräfte in dem Steg so verteilt, dass eine elastische Energiedissipation erfolgt, die in Radialrichtung gesehen auf den als Biegebalken fungierenden Steg eine reduzierte Hebelwirkung ausübt, da auch ein Teil der Kräfte in den Steg radial nach außen eingeleitet wird.

Unabhängig von einer darüber hinaus gehenden geeigneten Materialwahl für den Bolzen und den Bremsstern kann gemäß der Erfindung das Belastungsniveau in Bezug auf die Energieaufnahme beim Auftreffen für den Steg so weit reduziert werden, dass das Risiko eines mechanischen Versagens, d.h. Bruches, weitestgehend vermieden werden kann. Die Lebensdauer der Bremsvorrichtung kann hierdurch im Vergleich zum Stand der Technik erhöht werden.

In einer Ausführungsform kann sich die Auftrefffläche in Umfangsrichtung zur Führung des Bolzens vom Steg weg aufweiten bzw. mit anderen Worten, von der Mitte zwischen zwei Stegen gesehen läuft die Randfläche des Bremssterns so auf die Auftrefffläche des Stegs zu, dass der Bolzen quasi gegen die Auftrefffläche aufläuft, da sich der Bremsstern bis zum Halt noch weiterdreht. Diese Führung kann bereits zu einer ersten, wenn auch reibungsbedingten geringen Schwächung der Auftreffkräfte führen.

Gemäß der Erfindung ist es vorgesehen, dass der Steg, insbesondere im Wesentlichen im Bereich des Radius für die Randfläche des Bremssterns zwischen zwei Stegen, radial innenliegend zwei gleichförmige Löcher aufweist, die zu einer mittigen Achse des Stegs einen gleichen Abstand aufweisen.

Diese Löcher dienen dazu, die beim Auftreffen des Bolzens auf die Auftrefffläche des Stegs auftretenden Kräfte so umzuleiten, dass eine elastische Dissipation im Bereich des Stegs realisiert wird, die eine Verformung des Stegs gering hält bzw. so umsetzt, dass die Hebelkräfte auf den Steg, d.h. auf diesen als sich radial erstreckenden Biegebalken, abgeschwächt werden.

So ist es gemäß der Erfindung vorgesehen, dass eine zwischen der Achse des Rotors und dem Mittelpunkt eines Lochs radial verlaufende Linie die Auftrefffläche in einem Punkt schneidet, wobei der dem Punkt zugeordnete Radius kleiner ist als der Abstand zwischen der Achse des Rotors und der Achse des Bolzens.

In einer bevorzugten Ausführungsform des Bremssterns gemäß der Erfindung ist es vorgesehen, dass diese zwischen der Achse des Rotors und dem Mittelpunkt eines Lochs radial verlaufende Linie die Auftrefffläche in einem Punkt schneidet, wo bei Eingriff des Bolzens die größten Auftreffkräfte auftreten können.

In einer weiteren bevorzugten Ausführungsform des Bremssterns gemäß der Erfindung ist es vorgesehen, dass ein Radius, der aus dem Abstand des Mittelpunkts des Lochs zu der Achse des Rotors gebildet ist, zumindest gleich groß ist wie oder kleiner ist als ein Radius, der aus dem Abstand der Achse des Bolzens zu der Achse des Rotors abzüglich des Bolzenradius gebildet ist.

In diesem Zusammenhang ist es des Weiteren von Vorteil, wenn ein Lochdurchmesser zumindest gleich groß ist wie oder kleiner ist als der Bolzenradius.

Um ein schnelles Reaktionsverhalten bei einem Nothalt zu gewährleisten, ist es gemäß der Erfindung vorgesehen, dass nicht nur ein Steg vom Bremsstern abragt, sondern bei dem dieser mehrere, zwei oder vorzugsweise drei Stege aufweist, die in Umfangsrichtung zueinander äquidistant angeordnet sind.

Dabei ist es gemäß der Erfindung vorgesehen, dass bei N in Umfangsrichtung zueinander äquidistant angeordneten Stegen ein die Umfangsbreite eines Stegs bestimmender Öffnungswinkel eines jeden Stegs 360°/3N betragen soll.

In einem weiteren Aspekt betrifft die Erfindung eine Antriebseinrichtung für ein Gelenk zwischen zwei Gliedern eines Roboterarms mit einer Bremsvorrichtung nach einem der vorgehend geschilderten Ausführungsformen. Darüber hinaus betrifft die Erfindung einen Roboter mit einem Roboterarm mit mehreren Gliedern, die durch ein Gelenk relativ zueinander beweglich angeordnet sind, wobei zumindest ein Gelenk eine derart ausgestaltete Antriebseinrichtung aufweist.

Vorzugsweise soll die Bremsvorrichtung gemäß der Erfindung koaxial um einen Rotor, der durch die Antriebsachse bzw. Motorwelle einer Antriebseinrichtung, entweder antriebsseitig oder abtriebsseitig hierzu, gebildet wird, anordenbar sein, wie diese Antriebsvorrichtung beispielsweise in der Deutschen Patentanmeldung Nr. 10 2016 004 787 beschrieben ist. Insbesondere, jedoch nicht ausschließlich, richtet sich die Erfindung an derartige Antriebseinrichtungen bzw. Gelenke eines Gelenksarmroboters, insbesondere der Leichtbauweise zum Einsatz im Bereich der Mensch-Roboter-Kollaboration.

Gemäß der Erfindung wirken die im Stegverlauf vorgesehenen Ausnehmungen und die radial sich über den in Bezug auf den Mittelpunkt des Bolzens ergebenden Radius radial hinausgehende Auftrefffläche des Stegs so zusammen, dass im Steg eine solche elastische Verformung eingeleitet wird, die beim Auftreffen des Stegs auf den Bolzen zu einer schnelleren Geschwindigkeitsabnahme führt. Auswahl und Gestaltung der Ausnehmungen zusammen mit der Auftrefffläche nehmen, je nach Material für den Steg, Einfluss auf die Federkennlinie des Stegs, wodurch sich ein definierter Bremsvorgang realisieren lässt. Die Gefahr eines Knickens oder Knickbruchs des Stegs kann ausgeschlossen werden.

Weitere Vorteile und Merkmale der vorliegenden Erfindung ergeben sich aus der Beschreibung des anhand der beiliegenden Zeichnungen dargestellten Ausführungsbeispiels. Es zeigen
- Fig. 1: exemplarisch eine perspektivische Ansicht einer Bremsvorrichtung gemäß der Erfindung;
- Fig. 2: eine schematische Darstellung der Anordnung eines Bolzens im Verhältnis zu einem Bremsstern;
- Fig. 3a: eine schematische Darstellung eines Bremssterns mit entsprechenden Dimensionen in einer Ausführungsform gemäß der Erfindung; und
- Fig. 3b: eine schematische Darstellung des Bremssterns und der relativen Lage des Bolzens mit entsprechenden Dimensionen in einer Ausführungsform gemäß der Erfindung.

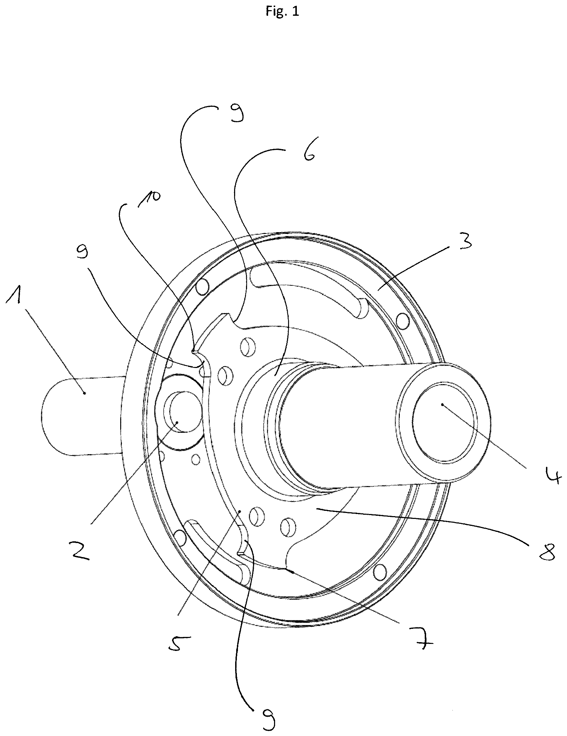

Die in Fig. 1 schematisch gezeigte Bremsvorrichtung gemäß der Erfindung lässt sich vorzugsweise an einem Ende einer Antriebseinrichtung eines Gelenks zwischen zwei Gliedern eines Roboterarms anbringen.

Die Bremsvorrichtung gemäß der Erfindung weist eine Bremsaktivierungsvorrichtung 1 auf, die beispielsweise als magnetaktivierter Halte- oder Federmechanismus ausgebildet sein kann. Die Bremsaktivierungsvorrichtung 1 ist konzipiert und ausgestaltet, bei Bedarf, z.B. bei einem unerwarteten Stromausfall, ein Sperrelement in der Form eines Bolzens 2 zu aktivieren, wodurch der Bolzen 2 dann bspw. durch eine Feder nach oben getrieben wird.

Mittels einer Lagerscheibe 3, die gehäusefest ist, d.h. mit einem nicht gezeigten Gehäuse der Antriebseinrichtung verbunden ist, kann eine Welle bzw. ein Rotor 4 der Antriebseinrichtung über bekannte, nicht dargestellte Lager gelagert sein. Die Bremsaktivierungsvorrichtung 1 mit dem Bolzen 2 ist an der Lagerscheibe 3 stationär angeordnet.

Der Rotor 4 trägt ein Bremselement in der Form eines Bremssterns 5, der mit dem Rotor 4 drehfest über eine sich axial erstreckende Hülse 6 verbunden, bspw. verklebt ist.

Der Bremsstern 5 weist drei in einem gleichen Umfangswinkel zueinander beabstandete Stege 7 auf, die sich radial von einem Innenring 8 des Bremssterns 5 erstrecken.

Mittels der vorzugsweise magnetbetätigten Bremsaktivierungsvorrichtung 1 kann der Bolzen 2 zwischen einer Sperrstellung, die dieser ohne Energiezufuhr einnimmt, und einer bei Energiezufuhr eingenommenen Freigabestellung bewegt werden. Die Fig. 1 zeigt den Bolzen 2 in einer solchen Freigabestellung; dieser Bolzen 2 befindet sich in Axialrichtung gesehen unterhalb des rotierenden Bremssterns 5 angeordnet, folglich außerhalb eines Eingriffs mit einem der Stege 7. Bei Energieabschaltung wird der Bolzen durch eine Federkraft einer Feder, die dann durch einen nicht mehr aktivierten Magneten freigegeben wird, in Richtung zu dem Bremsstern 5 gezwungen und gelangt damit zwischen zwei benachbarte Stege 7 des rotierenden Bremssterns 5, wodurch eine abrupte Abbremsung der Antriebswelle bzw. des Rotors 4 dann realisiert wird, sobald der nächste Steg 7 gegen den Bolzen 2 stößt.

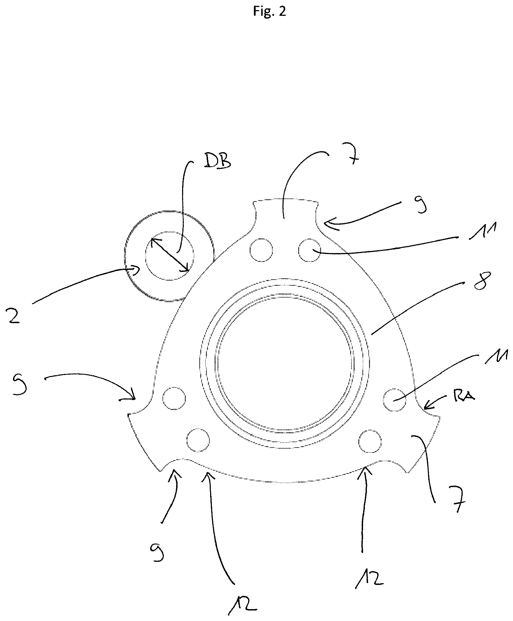

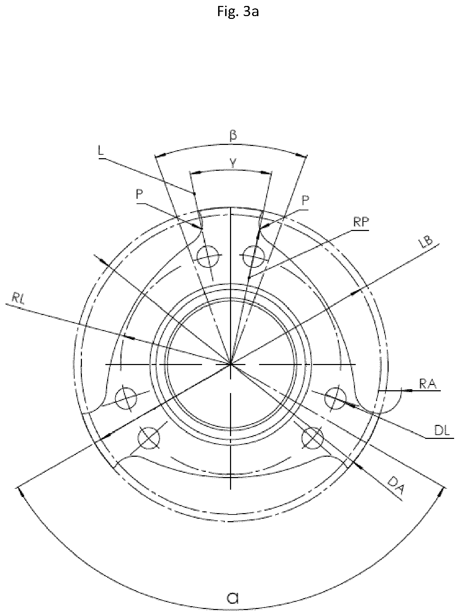

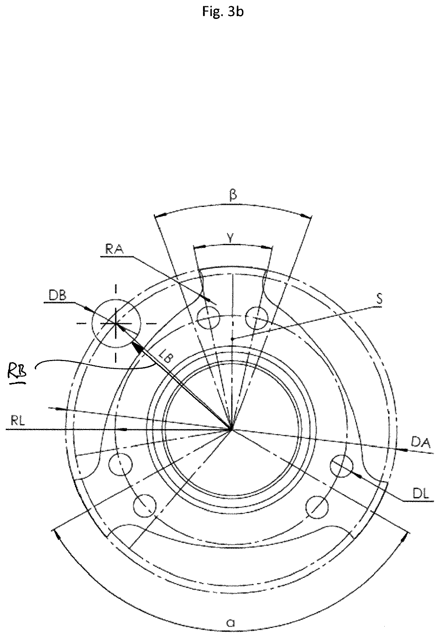

In der Fig. 2 ist das Verhältnis der Anordnung des Bolzens 2 in Bezug auf den Bremsstern 5 gezeigt, wobei einzelne geometrische Maße angegeben sind. Weitere relative Beziehungen der Dimensionen sind in den Figuren 3a und 3b veranschaulicht.

Der Bolzen 2 weist einen Durchmesser DB auf. Die von dem Innenring 8 radial abragenden Stege 7 weisen jeweils zu ihren beiden Seiten eine Auftrefffläche 9 auf, die in Bezug auf eine jeweilige Drehrichtung des Bremssterns 5 nach innen gewölbt ist und einen Radius RA aufweist, der zumindest dem Radius DB/2 des Bolzens 2 entspricht, damit der Bolzen 2 kongruent und durchgehend flächig bei Bremseingriff in der Auftrefffläche 9 zur Anlage kommen kann.

Gemäß der Erfindung ist es vorgesehen, dass sich die Auftrefffläche 9 in Radialrichtung über einen Abstand LB hinaus erstreckt, der den Abstand zwischen der Achse des Rotors 4 und der Achse des Bolzens 2 definiert, wie die Figur 3b veranschaulicht.

Durch diesen Überstand wird auch dann der Außendurchmesser DA der Stege 7 definiert, mithin des Bremssterns 5. Die außenliegenden Kanten der Stege 7 sind mit einer Fase 10 versehen, damit Kerbwirkungen auf den Bolzen 2 bei seinem Auftreffen infolge unbeabsichtigter Toleranzabweichungen vermieden werden.

Jeder Steg 7 weist ein Paar von Löchern 11 auf, deren Mittelpunkte auf einem gemeinsamen Radius RL liegen. Die Löcher 11 weisen jeweils einen gleichen Durchmesser DL auf und sind zu einer mittigen Achse S der Stege 7 in einem gleichen Abstand angeordnet.

Wie in Fig. 2 zu erkennen ist, weitet sich die Auftrefffläche 9 in Umfangsrichtung gesehen vom Steg 7 weg jeweils auf. Eine solche Aufweitung 12 unterstützt eine leichte Führung des Bolzens 2, wenn der Bremsstern 5 bei Bremseingriff gegen diesen aufläuft, kurz bevor die Auftrefffläche 9 auf den Bolzen 2 trifft.

Der Bremsstern 5 ist gemäß der Erfindung des Weiteren so ausgestaltet, dass ein zwischen der Achse des Rotors 4 und dem Mittelpunkt eines Lochs 11 verlaufende Linie L die Auftrefffläche 9 in einem Punkt P schneidet, wobei der dem Punkt P zugeordnete Radius RP kleiner ist als der Abstand LB zwischen der Achse des Rotors 4 und der Achse des Bolzens 2. Idealerweise ist dieser Punkt P derjenige Punkt im Bereich der Auftrefffläche 9, wo bei Eingriff des Bolzens 2 die größten Auftreffkräfte auftreten können.

Der Radius RL, auf dem die Mittelpunkte der Löcher 11 liegen, soll gemäß der Erfindung so gewählt sein, dass dieser Radius RL zumindest gleich groß ist oder vorzugsweise kleiner als ein Radius RB, der aus dem Abstand LB der Achse des Bolzens 2 zu der Achse des Rotors 4 abzüglich des Bolzenradius DB/2 gebildet ist.

Bevorzugt beträgt der Durchmesser DL der Löcher 11 höchstens die Hälfte des Radius DB/2 des Bolzens 2.

In der gezeigten Ausführungsform sind drei Stege 7 gezeigt, die zueinander jeweils einen gleichen Winkel α von 120° einhalten. Die in Umfangsrichtung sich ergebende Breite der Stege 7 schließt einen Winkel β von 40° ein, wobei der in Umfangsrichtung sich ergebende Abstand der beiden Löcher 11 pro Steg 7 zueinander einen Winkel γ einschließt, der die Hälfte des Winkels β nicht unterschreitet.

Die vorhergehend genannten Dimensionen und Größenverhältnisse stellen gemäß der Erfindung sicher, dass eine effektive Dissipation der Energie beim Auftreffen des Bolzens 2 auf die Auftrefffläche 9 des Bremssterns 5 dadurch bewerkstelligt wird, dass sich der Steg 7 elastisch nur in einem solchen Maß und in einer solchen kraftumleitenden Weise verformen kann, dass die Hebelwirkung auf diesen gering gehalten wird, so dass sich eine Materialermüdung kaum oder gar nicht einstellt und die Lebensdauer der einen solchen Bremsstern 5 implementierenden Bremsvorrichtung erheblich erhöhen lässt.

Um neben der erfindungsgemäßen Ausgestaltung des Bremssterns 5 in Bezug auf die genannten Dimensionsverhältnisse die Bremsvorrichtung entsprechend steif auszubilden, ist es gemäß der Erfindung darüber hinaus vorgesehen, eine das Steifigkeitsverhalten unterstützende Materialpaarung zwischen Bolzen 2 und Bremsstern 5 vorzusehen.

Um darüber hinaus auch das Gewicht einer Gelenkeinrichtung zwischen zwei Gliedern eines Roboterarms so gering wie möglich zu halten, kann der Bremsstern 5 als ein Blechteil ausgebildet sein, dessen Dicke idealerweise 2 mm nicht überschreitet. Demzufolge sollte die Dicke des Bolzens 2 im Bereich dieses Maßes liegen. Für die Realisierung eines kompakten Aufbaus vollführt der Bolzen 2 einen Hub bei Bremseingriff, der folglich dieses Maß nicht unterschreitet. Die Anordnung des Bolzens 2 in der Freigabestellung und die Hubhöhe bei Bremseingriff sind daher gemäß der Erfindung so gewählt, dass der Bolzen 2 mit seinem Umfangsrandabschnitt exakt flächig in der Auftrefffläche 9 zur Anlage kommen kann.

Um ein ideales elastisches Verformungsverhalten hierfür zu erhalten, ist es gemäß der Erfindung vorgesehen, dass der Bolzen 2 aus einem Weichautomatenstahl, bspw. Typ 1.0715 (11SMN30+C+A) gebildet ist, während der Bremsstern 5 aus einem Vergütungsstahl mit hoher Festigkeit bei gleichzeitig hoher Zähigkeit besteht, wie bspw. Typ 1.7225 (42CrMo4). Damit liegen die mechanischen Materialeigenschaften des Bremssterns 5 hinsichtlich Härte, Zugfestigkeit, Streckgrenze und Bruchdehnung über denjenigen des Bolzens 2, ggfs. unter Berücksichtigung entsprechender Maßnahmen zur Materialvergütung und Oberflächenbehandlung.

Ein weiterer Vorteil der erfindungsgemäßen Ausgestaltung eines Bremssterns mit definierten Ausnehmungen liegt darin, dass infolge der masseabhängigen geringeren Beschleunigung und damit einhergehend einem geringeren Maximaldrehmoment die Belastungen auf ein Getriebe und des Rotors bzw. die Antriebswelle der Antriebseinrichtung geringer sind. Im Umkehrschluss bedeutet dies, dass beim Bremseingriff eine schnellere Geschwindigkeitsabnahme erfolgen kann.

Über die Auswahl der Anzahl und/oder der Form und/oder der Anordnung und der Position der Ausnehmungen bzw. Löcher kann gemäß der Erfindung gezielt Einfluss auf die Einstellung optimaler Prozessparameter hinsichtlich Beschleunigungs- und Bremsverhalten genommen werden.

### Bezugszeichenliste

- 1: Bremsaktivierungsvorrichtung
- 2: Bolzen
- 3: Lagerscheibe
- 4: Rotor
- 5: Bremsstern
- 6: Hülse
- 7: Steg
- 8: Innenring
- 9: Auftrefffläche
- 10: Fase
- 11: Löcher
- 12: Aufweitung

- DB: Durchmesser Bolzen
- RA: Radius Auftrefffläche
- LB: Abstand Achse Rotor - Achse Bolzen
- DA: Außendurchmesser Stege/Bremsstern
- DL: Durchmesser Löcher
- S: Mittige Achse Steg
- L: Linie Achse Rotor - Mittelpunkt Loch
- P: Schnittpunkt Linie L in Auftrefffläche
- RP: Radius Schnittpunkt P
- RL: Radius in Bezug auf Mittelpunkte Löcher
- RB: Radius LB minus DB/2

## Patentansprüche

1. Bremsvorrichtung für eine Antriebseinrichtung eines Gelenks zwischen zwei Gliedern eines Roboterarms aufweisend eine Bremsaktivierungsvorrichtung (1) und ein Sperrelement (2), wobei die Bremsaktivierungseinrichtung (1) ausgebildet ist, das Sperrelement (2) bei Bedarf in Eingriff mit einem Bremselement (5) zu bringen, das mit einem Rotor (4) der Antriebseinrichtung drehfest verbunden ist, um eine Drehung des Rotors (4) zu stoppen, wobei das Sperrelement als ein Bolzen (2) ausgebildet ist und das Bremselement als ein Bremsstern (5) ausgebildet ist, der zumindest einen radial von der Achse des Rotors (4) abragenden Steg (7) aufweist,
wobei der Steg (7) eine mit dem Bolzen (2) bei Eingriff zusammenwirkende Auftrefffläche (9) aufweist, die in Bezug auf eine Drehrichtung des Bremssterns (5) nach innen gewölbt ist und einen Radius (RA) aufweist, der zumindest dem Radius (DB/2) des Bolzens (2) entspricht, und sich die Auftrefffläche (9) in Radialrichtung über einen Abstand (LB) zwischen der Achse des Rotors (4) und der Achse des Bolzens (2) hinaus erstreckt,
**dadurch gekennzeichnet, dass**
der Steg (7) radial innenliegend zwei gleichförmige Löcher (11) aufweist, die zu einer mittigen Achse (S) des Stegs (7) einen gleichen Abstand aufweisen,
wobei eine zwischen der Achse des Rotors (4) und dem Mittelpunkt eines Lochs (11) radial verlaufende Linie (L) die Auftrefffläche (9) in einem Punkt (P) schneidet, und wobei der dem Punkt (P) zugeordnete Radius (RP) kleiner ist als der Abstand (LB) zwischen der Achse des Rotors (4) und der Achse des Bolzens (2).

2. Bremsvorrichtung nach Anspruch 1, bei dem sich die Auftrefffläche (9) in Umfangsrichtung zur Führung des Bolzens (2) vom Steg (7) weg aufweitet.

3. Bremsvorrichtung nach Anspruch 1, bei dem die zwischen der Achse des Rotors (4) und dem Mittelpunkt eines Lochs (11) radial verlaufende Linie (L) die Auftrefffläche (9) in einem Punkt (P) schneidet, wo bei Eingriff des Bolzens (2) die größten Auftreffkräfte auftreten.

4. Bremsvorrichtung nach Anspruch 1 oder 3, bei dem ein Radius (RL), der aus dem Abstand des Mittelpunkts des Lochs (11) zu der Achse des Rotors (4) gebildet ist, zumindest gleich groß ist wie oder kleiner ist als ein Radius (RB), der aus dem Abstand (LB) der Achse des Bolzens (2) zu der Achse des Rotors (4) abzüglich des Bolzenradius (DB/2) gebildet ist.

5. Bremsvorrichtung nach Anspruch 1, 3 oder 4, bei dem ein Lochdurchmesser (DL) zumindest gleich groß ist wie oder kleiner ist als der Bolzenradius (DB/2).

6. Bremsvorrichtung nach einem der Ansprüche 1 bis 5, bei dem N in Umfangsrichtung zueinander äquidistant angeordnete Stege (7) vorgesehen sind und ein die Umfangsbreite eines Stegs (7) bestimmender Öffnungswinkel (α) eines jeden Stegs (7) 360°/3N beträgt.

7. Bremsvorrichtung nach Anspruch 6, bei dem drei Stege (7) vorgesehen sind.

8. Antriebseinrichtung für ein Gelenk zwischen zwei Gliedern eines Roboterarms mit einer Bremsvorrichtung nach einem der Ansprüche 1 bis 7.

9. Roboter mit einem Roboterarm mit mehreren Gliedern, die durch ein Gelenk relativ zueinander beweglich angeordnet sind, wobei zumindest ein Gelenk eine Antriebseinrichtung nach Anspruch 8 aufweist.

## Claims

1. Braking device for a drive device of a joint between two links of a robot arm comprising a brake activation device (1) and a locking element (2), wherein the brake activation device (1) is designed to bring the locking element (2) into engagement with a braking element (5) when required, which is connected to a rotor (4) of the drive device in a rotationally fixed manner in order to stop a rotation of the rotor (4), the locking element being designed as a bolt (2) and the braking element being designed as a braking star (5) which comprises at least one web (7) projecting radially from the axis of the rotor (4), in which the web (7) comprises an impact surface (9) which interacts with the bolt (2) when engaged, and which is curved inwards with respect to a direction of rotation of the braking star (5) and comprises a radius (RA) which corresponds at least to the radius (DB/2) of the bolt (2), and in which the impact surface (9) extends in the radial direction beyond a distance (LB) between the axis of the rotor (4) and the axis of the bolt (2),
**characterized in that**
the web (7) comprises two uniform holes (11) located radially inwards, which are equally spaced from a central axis (S) of the web (7),
in which a line (L) extending radially between the axis of the rotor (4) and the center of a hole (11) intersects the impact surface (9) at a point (P), and in which the radius (RP) associated with the point (P) being smaller than the distance (LB) between the axis of the rotor (4) and the axis of the bolt (2).

2. Braking device according to claim 1, in which the impact surface (9) expands away from the web (7) in the circumferential direction for guiding the bolt (2).

3. Braking device according to claim 1, in which the line (L) extending radially between the axis of the rotor (4) and the center of a hole (11) intersects the impact surface (9) at a point (P) where the greatest impact forces occur when the bolt (2) is engaged.

4. Braking device according to claim 1 or 3, in which a radius (RL) formed by the distance of the center of the hole (11) to the axis of the rotor (4) is at least equal to or smaller than a radius (RB) formed by the distance (LB) of the axis of the bolt (2) to the axis of the rotor (4) minus the bolt radius (DB/2).

5. Braking device according to claim 1, 3 or 4, in which a hole diameter (DL) is at least equal to or smaller than the bolt radius (DB/2).

6. Braking device according to any one of claims 1 to 5, in which N webs (7) being arranged equidistantly to each other in the circumferential direction are provided, and an opening angle (α) of each web (7) determining the circumferential width of a web (7) is 360°/3N.

7. Braking device according to claim 6, in which three webs (7) are provided.

8. Drive device for a joint between two links of a robot arm having a braking device according to any one of claims 1 to 7.

9. Robot comprising a robot arm having a plurality of links arranged to be movable relative to each other by a joint, at least one joint comprising a drive device according to claim 8.

## Revendications

1. Dispositif de freinage pour un système d'entraînement d'une articulation entre deux membres d'un bras de robot comportant un dispositif d'activation de frein (1) et un élément de verrouillage (2), dans lequel le dispositif d'activation de frein (1) est conçu pour engager si nécessaire l'élément de verrouillage (2) avec un élément de freinage (5) qui est relié solidairement en rotation avec un rotor (4) du système d'entraînement pour arrêter une rotation du rotor (4) et dans lequel l'élément de verrouillage est configuré comme un boulon (2) et l'élément de freinage est configuré comme un frein en étoile (5) qui présente au moins une branche (7) faisant saillie radialement par rapport à l'axe du rotor (4), laquelle branche (4) présente une surface de contact (9) interagissant avec le boulon (2) en cas d'engagement qui est courbée vers l'intérieur par rapport à un sens de rotation du frein en étoile (5) et présente un rayon (RA) qui correspond au moins au rayon (DB/2) du boulon (2), laquelle surface de contact (9) s'étend dans le sens radial sur une distance (LB) entre l'axe du rotor (4) et l'axe du boulon (2),
**caractérisé en ce que**
la branche (7) comporte radialement à l'intérieur deux trous (11) de même forme qui présentent une même distance par rapport à un axe médian (S) de la branche (7),
une ligne (L) qui court radialement entre l'axe du rotor (4) et le centre d'un trou (11) coupant la surface de contact (9) en un point (P) et le rayon (RP) associé au point (P) étant inférieur à la distance (LB) entre l'axe du rotor (4) et l'axe du boulon (2).

2. Dispositif de freinage selon la revendication 1, dans lequel la surface de contact (9) s'évase dans le sens périphérique pour guider le boulon (2) en direction opposée à la branche (7).

3. Dispositif de freinage selon la revendication 1, dans lequel la ligne (L) courant radialement entre l'axe du rotor (4) et le centre d'un trou (11) coupe la surface de contact (9) en un point (P) où les forces de contact les plus importantes surviennent lors de l'engagement du boulon (2).

4. Dispositif de freinage selon la revendication 1 ou 3, dans lequel un rayon (RL) qui correspond à la distance du centre du trou (11) par rapport à l'axe du rotor (4) est au moins égal ou est inférieur à un rayon (RB) qui correspond à la distance (LB) de l'axe du boulon (2) par rapport à l'axe du rotor (4) moins le rayon du boulon (DB/2).

5. Dispositif de freinage selon la revendication 1, 3 ou 4, dans lequel un diamètre du trou (DL) est au moins égal ou est inférieur au rayon du boulon (DB/2).

6. Dispositif de freinage selon une des revendications 1 à 5, dans lequel N branches (7) disposées de façon équidistante entre elles dans le sens périphérique sont prévues et un angle d'ouverture (□) de chaque branche (7) déterminant la largeur circonférentielle d'une branche (7) est égal à 360°/3N.

7. Dispositif de freinage selon la revendication 6, dans lequel trois branches (7) sont prévues.

8. Système d'entraînement pour une articulation entre deux membres d'un bras de robot avec un dispositif d'activation de frein selon une des revendications 1 à 7.

9. Robot avec un bras de robot doté de plusieurs membres qui sont disposés de façon mobile entre eux par le biais d'une articulation, dans lequel au moins une articulation comporte un système d'entraînement selon la revendication 8.
